# EUROPEAN PATENT APPLICATION

(11) **EP 4 242 183 A1**
(43) Date of publication of application: **13.09.2023**
(21) Application number: 23158346.9
(22) Date of filing: 23.02.2023
(51) Int. Cl.: C04B 28/02, C04B 28/04, C04B 111/60

(54) **PROCESS FOR MAKING A DECORATIVE FLOORING TILE AND DECORATIVE FLOORING TILE OBTAINED BY THIS PROCESS**

(30) Priority: 23.02.2022 IT 202200003389
(71) Applicant: Bellamoli Granulati S.p.A., 37023 Grezzana (VR) (IT)
(72) Inventor: Bellamoli, Cesare, 37023 Grezzana (VR) (IT)
(74) Representative: Fisauli, Beatrice A. M.

(57) **Abstract**

It is a decorative flooring tile and a process for making it.

In particular, the decorative flooring tile has a special aesthetic effect due to a pleasant surface sheen and the wide range of colours with which it can be made.

In addition, the procedure for making such an article makes it possible to obtain a tile with an excellent finish, as well as high mechanical strength and durability.

## Description

The present invention relates generally to a cementitious-based decorative flooring tile and a process for making it.

In particular, it relates to a decorative flooring tile of particular aesthetic appeal due to a pleasing surface sheen and the wide range of colours with which it can be made.

In addition, the invention also refers to a process for making such lath so as to obtain an article with an excellent finish, as well as high mechanical strength and durability.

As is well known, in the construction industry there are different types of flooring and ways of laying them.

Among the most sought-after since antiquity, both for their beauty and for their strength and durability over time, are Venetian floors. This designation pertains to two types of flooring for both indoor and outdoor use.

The floor used for interiors consists of a cement mortar casting in which small pieces of marble are embedded in bulk or in a pattern: when hardened, the floor is leveled and smoothed with a grinder and finally polished.

Outdoor flooring is mainly used for terraces, and in any case for outdoor practicable surfaces, also called Palladian or Venetian terrazzo flooring.

This type of floor is made from a set of small, irregularly contoured flattened pieces of marble or stone, connected and bedded with mortar, sometimes coloured, and laid generally on a subfloor.

In general, paving is composed of marble and stone granules up to 40 mm in diameter that have pebble lime or cement as a binder, mixed with fine grit and fine earthenware up to 5 mm in diameter.

The inclusion within the mixture of small pieces of marble not only ensures optimal aesthetic performance, but at the same time increases the wear resistance capacity of the finished product.

The types of floor making vary from fine-grained to medium-grained with the profiling of colour variations between field and band.

This is meticulous and rigorous work done by skilled artisans, the terrazzo workers, using the same techniques as in the 16th century.

When made by skilled craftsmen, a Venetian floor is solid and durable, as well as very elegant and beautiful to look at but certainly very expensive.

Over time, for reasons of economy, the industrialization of the artisanal method has introduced grit tiles of various sizes to the market, having a similar appearance to the Venetian floor, with a lower surface finish, but with a major simplification for installation.

The formulation of the mixture is very similar to that of the artisanal method: cement, water and marble pieces of various sizes.

The resulting mixture is first mixed with mixers, then poured into special molds, which is followed by a vibro-compaction action, finally followed by drying.

However, the processes according to the known technique do not allow obtaining items having both aesthetic performance and high thicknesses such that they can be used with dry-laying and/or driveway use similarly to self-locking concrete elements.

In addition, other processes according to the known technique involve the use of a cement-based mixture to form blocks of considerable size in the range of 3/4 cubic meters, which, however, must subsequently be cut into slabs and processed resulting in high production costs.

The purpose of the present invention is to provide a decorative flooring tile and a process for its manufacture that solves these and other problems of known systems.

Another purpose of the invention is to obtain a lath whose installation is fast and inexpensive, either by the classical method on mortar or by dry laying on a sand bed.

A further purpose of the invention is to provide a lath that once laid forms an outdoor pavement with a surface finish similar to a handcrafted outdoor Venetian floor, but with superior mechanical strength, thus having characteristics that make it drivewayable.

Another purpose of the invention is to provide a lath whose walking surface is shiny but not slippery.

Another purpose of the invention is to provide lath with a range of colours such that it can be matched to natural outdoor environments.

These and other purposes are all achieved, according to the invention, by a process for making a decorative flooring tile, characterized by comprising the steps of:
- mixing powders and/or granules of marble, cement and water so as to obtain an initial mixture;
- vibro-compacting the initial mixture into a mold of determined shape;
- curing and solidifying the vibro-compacted initial mixture inside a mold so as to obtain a solidified element;
- extract the previously obtained solidified element from the mold;
- section the solidified element into at least two equal parts, so as to obtain two decorative flooring tiles, in which the cutting section of the solidified element corresponds to the face to be placed in view of each decorative flooring tile.

Thanks to this procedure, a decorative flooring tile is obtained in which the face corresponding to the cut section of the solidified element shows the sectioned marble granules, similar to the aesthetic rendering of classic Venetian terrazzo flooring.

At the same time, this face is non-slip as a result of the processing performed.

Advantageously, after the sectioning of the solidified element, each decorative flooring tile can be calibrated and brushed, so as to obtain laths that are equal to each other for ease of installation, and with improved mechanical properties.

In order to vary the aesthetic performance of the laths thus obtainable, the marble powders and/or granules may have determined grain size.

In addition, the initial mixture may include high-strength white or gray cement, so as to obtain laths with excellent mechanical properties.

The mold in which the initial mixture is vibro-compacted can be double-height.

The 'solidified element can, then, be sectioned by means of a diamond disc or wire, so that the two faces obtained from the cut already have a polished surface.

The two faces obtained thus highlight the sectioned marble granules.

By sectioning the solidified element, two decorative laths can be obtained each with one face smoothed by the sectioning. In case they are more than two, the efficiency of the process can be increased.

The purposes and advantages of the invention are also achieved by a decorative flooring tile obtained by the previously defined process, in which at least one face of such a lath shows sectioned marble granules.

The aesthetic performance of the lath is high and at the same time the surface obtained by cutting has excellent mechanical properties, in particular it is non-slip.

The lath made in this way can also be laid outdoors dry and has aesthetic characteristics similar to a Venetian terrazzo paving, but superior technical characteristics, resulting in extreme ease in its laying.

In addition, the lath according to the invention, being a "bulk" mixture, has the peculiarity of showing on any sectioned side the same aesthetic characteristics, even if it is further sectioned, for example, for laying requirements.

Further features and details may be better understood from the description that follows, given as a non-limiting example, as well as from the attached drawing plates in which:
fig. 1 is an axonometric view from above of a lath according to the invention;
fig. 2 is an axonometric view from above of a set of laths according to the invention so as to make a pavement.

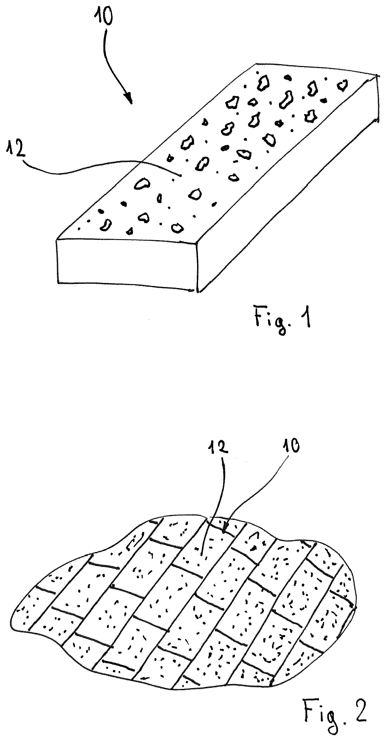

With reference to Figs. 1 and 2, 10 denotes a lath suitable for forming an outdoor paving with characteristics similar to a Venetian terrace.

Lath 10 is a decorative article made by vibro-compaction of natural stone and cement.

It has an upper face 12 with a brushed finish that gives that surface, i.e., the one in view and on which it goes to rest, special decorative and non-slip characteristics.

The procedure for making lath 10, the subject of the invention, is illustrated below.

The first stage involves the mixing of concrete.

Specifically, marble granules and powders of various natural colours, white or gray high-strength cement and water are collected and mixed in suitable containers in appropriate amounts, resulting in a mixture.

The second stage involves vibro-compaction of the previously obtained mixture.

More specifically, the previously obtained mixture is placed in appropriate double-height molds to undergo vibro-compaction at high pressures. This stage of the process gives the product a high degree of strength and durability over time.

The third stage involves sectioning.

Specifically, after the necessary curing and solidification of the vibro-compacted mixture, each element extracted from its mold is sectioned using a diamond disk or wire.

Two specular pieces are thus obtained, i.e., two rough laths, each with one side having a polished surface that highlights the sectioned marble granules, providing an appearance similar to that of fine Venetian-style terrazzo.

The fourth and final step involves calibrating and finishing the rough laths.

More specifically, each lath is calibrated and brushed to varying degrees of fineness using appropriate machines, resulting in a decorative finished flooring tile that has a surface that remains sufficiently shiny but not slippery.

The lath thus obtained, while also usable for indoor flooring, is particularly useful for making outdoor flooring, as it is very strong and durable.

In fact, the lath according to the invention, can be used for footpaths, driveways, sidewalks and all outdoor surfaces subject to weathering and intense and continuous mechanical stress.

Decorative flooring tile according to the invention is therefore functional and durable, and at the same time has high aesthetic performance.

Depending on the initial mixture used, it is possible to obtain planks of various natural colours, so that there are endless combinations for the spaces in which they are to be used.

Due to the possibility of combining together marble granules of different colours, chosen according to the needs and aesthetic performance to be achieved, the decorative flooring tile according to the invention can adapt to any decorative flooring design to be achieved.

For example, glossy natural stone inserts can be used, as well as opaque marble granules in a variety of colours.

Such features are even more important when decorative flooring tile according to the invention is used for transitional flooring from indoor to outdoor space.

An engineer in the field may contemplate modifications or variations that are to be considered within the scope of protection of the present invention.

For example, the manufacturing process may involve dividing the element obtained from the vibro-compaction stage into three or more strips so as to increase productivity.

In addition, the surface of the decorative flooring tile that remains in view can be treated with additional and different processing.

## Claims

1. Procedure for making a decorative tile (10) for paving, **characterised by** the fact that it comprises the following steps:
- mixing powders and/or granules of marble, cement and water to obtain an initial mixture;
- vibro-compacting the initial mixture into a mould of a given shape;
- maturing and solidifying the vibro-compacted initial mixture in a mould, so as to obtain a solidified element;
- remove the solidified element from the mould;
- cutting the solidified element into at least two equal parts, so as to obtain two decorative tiles (10), wherein the cutting section of the solidified element corresponds to the face (12) to be placed in view of each decorative tile (10).

2. Procedure according to any of the preceding claims, wherein, after sectioning the solidified element, each decorative tile (10) is calibrated and brushed.

3. Procedure according to any one of the preceding claims, wherein the marble powders and/or granules have a determined grain size.

4. Procedure according to any one of the preceding claims, wherein the initial mixture comprises high strength white or grey cement.

5. A process according to any one of the preceding claims, wherein the mould in which the initial mixture is vibro-compacted is of double height.

6. Procedure according to any one of the preceding claims, wherein the solidified element is sectioned by means of a diamond disc or wire, so that the two faces (12) obtained from the cut have a polished surface.

7. Procedure according to any of the preceding claims, wherein the two faces (12) obtained show sectioned marble granules.

8. Procedure according to any one of the preceding claims, wherein the sectioning of the solidified element comprises obtaining at least two decorative tiles (10).

9. Decorative tile (10) obtained by the process according to one of the preceding claims, wherein at least one face of said listel shows sectioned marble granules.

10. Decorative tile (10) according to any one of the preceding claims, wherein the at least one face having sectioned marble granules is non-slip.
